# EUROPÄISCHE PATENTSCHRIFT

(11) **EP 2 096 015 B1**
(45) Veröffentlichungstag und Bekanntmachung des Hinweises auf die Patenterteilung: **22.09.2010**
(21) Anmeldenummer: 09001963.9
(22) Anmeldetag: 12.02.2009
(51) Int. Cl.: B61B 12/02, B66B 23/08, B66B 23/10

(54) **Skilift mit Hilfsförderboden**
Ski lift with auxiliary moving base
Remonte-pente doté d'un sol d'aide au transport

(30) Priorität: 26.02.2008 DE 202008002698 U
(43) Veröffentlichungstag der Anmeldung: 02.09.2009
(73) Patentinhaber: ChairkiD Fördertechnik GmbH, 6300 Wörgl (AT)
(72) Erfinder: Huber, Manfred, Dipl.Ing, 85435 Erding (DE); Wyhnalek, Alfred, 85435 Erding (DE)
(74) Vertreter: Thoma, Michael

(56) Entgegenhaltungen:
- CH-A- 393 400
- US-A- 3 548 753
- US-A- 4 476 974
- US-A- 5 042 648
- US-A- 5 361 893

## Beschreibung

Die vorliegende Erfindung betrifft eine Personenförderanlage, insbesondere Skiliftanlage in Form einer Sessellift- oder Umlaufgondelbahnanlage, mit einem Hauptförderer, insbesondere Sessellift oder Umlaufgondelbahn, einer Ein-/ Ausstiegsplattform zum Besteigen und/oder Verlassen des an der Ein-/Ausstiegsplattform vorbeifahrenden Hauptförderers, sowie einem Hilfsförderer in Form eines Förderbodens zum Hin- und/oder Abbefördern von Personen an die und/oder von der Ein-/Ausstiegsplattform, wobei der Förderboden eine kurvenförmige Förderbahn besitzt, die einen ersten Förderbahnabschnitt mit geradem Verlauf, der schräg zur Förderrichtung des Hauptförderers auf die Ein-/Ausstiegsplattform zuführt oder von der Ein-/Ausstiegsplattform wegführt, sowie einen zweiten Förderbahnabschnitt mit geradem Verlauf, der im Wesentlichen parallel zur Förderrichtung des Hauptförderers an der Ein-/Ausstiegsplattform verläuft, umfasst.

Bei Skiliftanlagen der genannten Art werden regelmäßig Umlaufförderer beispielsweise in Form eines Sessellifts oder einer Umlaufgondelbahn eingesetzt, um hohe Personenförderleistungen zu erreichen. Ein zu lösendes Problem ist hier allerdings das Besteigen des Umlaufförderer bzw. das Absteigen hiervon, da zur Erreichung hoher Förderleistungen regelmäßig hohe Umlaufgeschwindigkeiten gefahren werden müssen. Um diesem Problem zu begegnen, werden bei modernen Anlagen die Personentragmittel, d.h. die Sessel oder Gondeln, vom umlaufenden Förderseil im Ein- und Ausstiegsbereich abgekuppelt und mit gegenüber dem Förderseil verringerter Fördergeschwindigkeit durch den Einstiegsbereich bewegt. Dies erfolgt jedoch zum Teil mit immer noch substantieller Geschwindigkeit, um zu verhindern, dass die Förderleistung zu sehr sinkt. Hiervon abgesehen existieren weiterhin eine Vielzahl älterer Umlaufbahnen insbesondere in Form von Sesselliften, die im Ein- und Ausstiegsbereich nicht abkuppeln können, so dass auf den mit voller Fördergeschwindigkeit durch den Einstiegsbereich fahrenden Sessel aufzusteigen bzw. von diesem Abzusteigen ist.

Um diese Problematik zu entschärfen, wurde deshalb bereits vorgeschlagen, im Ein- und Ausstiegsbereich solcher Personenumlaufförderer einen Hilfsförderer in Form eines Förderbodens zu verwenden, der einerseits die zusteigenden Personen in den Einstiegsbereich führt bzw. absteigende Personen aus dem Ausstiegsbereich herausfördert, und andererseits den Geschwindigkeitsunterschied zum Umlaufförderer mindert. Derartige Förderböden werden bei Skiliftanlagen regelmäßig in Form von endlosen Kunststoffgurten mit aufgeklebtem Schneeteppich oder in Form eines endlosen Gummigurts ausgebildet, deren seitlicher Verlauf durch Schieflaufwächter überwacht wird, um ein Geradeauslaufen des Bandes zu gewährleisten.

Derartige Hilfsförderböden benötigen jedoch herkömmlicherweise im Ein- bzw. Ausstiegsbereich des Sessellifts bzw. der Gondelumlaufbahn ausreichend Platz, um die zu befördernden Personen mit ausreichender Sicherheit zwischen die mehr oder minder knapp aufeinander folgenden Sessel bzw. Kabinen einzufädeln bzw. auszufädeln. Gerade bei älteren Sesselliftanlagen, aber auch Umlaufgondelbahnen, ist dieser Platz jedoch nicht immer vorhanden. Insbesondere wenn der Seilzug unmittelbar hinter dem Umkehrrad des Umlaufförderer mittels dort platzierter Spanngewichte abgefangen bzw. aufgebracht wird, ist es nicht möglich, einen ausreichend langen Förderboden von hinten in Förderrichtung in den Einstiegsbereich zu führen oder bei Quereinsteigern quer zur Förderrichtung des Hauptförderers unter dessen Umkehrrad zu führen.

Aus der US 3,548,753 ist eine Skiliftanlage der eingangs genannten Art bekannt bei der der als Zuförderer dienende Förderboden in drei separate Förderbodenteile unterteilt ist, die jeweils spitzwinklig aneinander anschließen, so dass zusteigende Skifahrer auf einer polygonzugartig abgeknickten Förderbahn dem Einstiegsplatz zugefördert werden. Die genannten Förderbodenteile werden hierbei jeweils intermittierend angetrieben, d.h. von null auf eine bestimmte Fördergeschwindigkeit beschleunigt und wieder auf null abgebremst, so dass Skifahrer auf das Förderband im stehenden Zustand aufsteigen können.

Weiterhin zeigt die CH 398 400 eine Skiliftanlage, bei der ein kreisringförmiger Förderboden von einer geraden Zustiegsrampe her bestiegen wird.

Hiervon ausgehend liegt der vorliegenden Erfindung die Aufgabe zugrunde, eine verbesserte Personenförderanlage, insbesondere Skiliftanlage der eingangs genannten Art zu schaffen, die Nachteile des Standes der Technik vermeidet und Letzteren in vorteilhafter Weise weiterbildet. Insbesondere soll ein einfaches und sicheres Zusteigen auch bei beengten Platzverhältnissen im Bereich der Einstiegsplattform des Sessellifts bzw. der Umlaufgondelbahn erreicht werden, das durch eine ausreichende Länge der Hilfsförderstrecke ein Zusteigen von außerhalb des Gefahrenbereichs erlaubt.

Erfindungsgemäß wird diese Aufgabe durch eine Personenförderanlage gemäß Anspruch 1 gelöst. Bevorzugte Ausgestaltungen der Erfindung sind Gegenstand der abhängigen Ansprüche.

Es wird also vorgeschlagen, den Hilfsförderboden sozusagen um die Ecke bzw. Kurve zu führen, so dass trotz der durch die Förderrichtung des Personenumlaufförderer vorgegebenen Zustiegs- bzw. Abstiegsrichtung die zu befördernden Personen über eine ausreichend lange Förderbodenstrecke von nahezu beliebiger Richtung zum Einstiegsbereich hinbefördert bzw. von diesem abbefördert werden können. Erfindungsgemäß ist vorgesehen, dass der Förderboden eine kurvenförmige Förderbahn beschreibt, die einen ersten Förderbahnabschnitt, der spitzwinklig geneigt zur Förderrichtung des Hauptförderers auf die Einstiegsplattform zuführt oder von der Ausstiegsplattform wegführt, sowie einen zweiten Förderbahnabschnitt, der im Wesentlichen parallel zur Förderrichtung des Hauptförderers an der Einstiegsplattform verläuft, umfasst. Durch das Hinbefördern bzw. Abbefördern der Personen entlang einer Kurve kann auch bei beengten Platzverhältnissen eine ausreichend lange Hilfsförderstrecke realisiert werden, mittels derer die zu befördernden Personen sicher von einem ausreichend weit außerhalb des Gefahrenbereichs liegenden Startpunkts passend im Takt der ankommenden Gondeln in den Eintiegsbereich gefördert bzw. umgekehrt abbefördert werden können. Die Förderbahn des Förderbodens fährt seitlich in den Förderbereich des Hauptförderers hinein und sodann ein Stück weit parallel zur Förderrichtung des Hauptförderers, um ein problemloses Ein- und Aussteigen zu gewährleisten.

Das Kurvensegment des Förderbodens kann hierbei unterschiedlich groß hinsichtlich Krümmungsradius und/oder überstrichenen Winkels ausgebildet sein. Prinzipiell kann die Kurvenbahn des Förderbodens einen beliebigen Winkel von sinnvollerweise bis zu 180° überstreichen. Um den zu befördernden Personen instinktiv das Gefühl zu geben, richtig einzusteigen, und um andererseits keine zu starken Beschleunigungen ausüben zu müssen, kann in vorteilhafter Weiterbildung der Erfindung vorgesehen sein, dass der zuvor genannte erste Förderabschnitt unter einem Winkel von etwa 20° bis 60°, vorzugsweise etwa 30° zur Förderbahn des Hauptförderers geneigt auf den genannten Hauptförderer zuführt bzw. von diesem wegführt. Hierdurch wird ein guter Kompromiss zwischen einerseits schnellem Heranführen bzw. Wegführen und andererseits geringen Fliehkräften auf die auf dem Förderboden stehenden Personen erreicht.

Durch das schräge Zuführen und das sodann kurvige Einschwenken auf die Hauptförderrichtung des Hauptförderers kann auch bei beengten Platzverhältnissen der tatsächlich Zustiegs- bzw. Ausstiegspunkt nahezu unabhängig vom Umkehrpunkt des als Umlaufförderers ausgebildeten Hauptförderers gewählt werden. Nach einer vorteilhaften Ausführung der Erfindung kann der Förderboden von einem Umkehrpunkt des Hauptförderers in Förderrichtung des Hauptförderers beabstandet sein, insbesondere außerhalb des Wirkbereichs des Umkehrkarussells des Hauptförderers angeordnet sein, was insbesondere bei älteren Sesselliften von Vorteil sein kann, die ein beengtes Stationshaus besitzen, in dem das Umkehrkarussell und Spanngewichte angeordnet sind. Durch die kurvige Ausbildung des Hilfsförderers kann die Einstiegsplattform einige Meter in Förderrichtung vom Umkehrkarussell beabstandet vorgesehen werden, da ungeachtet der beengten Platzverhältnisse am Umkehrkarussell der Hilfsförderer seitlich herangeführt wird und dann in die Förderrichtung des Hauptförderers einschwenkt.

Nach einer alternativen, ebenfalls vorteilhaften Ausführung der Erfindung kann der Förderboden jedoch auch im Umkehrbereich des Hauptförderers angeordnet sein, wobei insbesondere vorgesehen sein kann, dass der bogenförmige bzw. kurvenförmige Förderbahnabschnitt des Förderbodens der Umkehrbahn des Hauptförderers folgt. In besonders vorteilhafter Weiterbildung der Erfindung kann die kurvenförmige Förderbahn des Förderbodens an die Krümmung bzw. den Verlauf der bogenförmigen Förderbahn des Hauptförderers in dessen Umkehrbereich angepasst sein, so dass der Förderboden im Wesentlichen parallel den um das Umkehrkarussell geführten Personentragmitteln folgt. Dies kann ggf. auch dazu genutzt werden, den Umkehrbereich des Hauptförderers als Einstiegsbereich oder Ausstiegsbereich zu nutzen, so dass besonders kompakt bauende Umkehrstationen ohne ausladende, separate Einstiegs- bzw. Ausstiegsbereiche vorgesehen werden können. Eine solche kurvenförmige Förderbahn des Hilfsförderers kann insbesondere bei Umlaufgondelbahnen von Vorteil sein, die einen an sich recht großen Umkehrbogen für die Umlaufgondeln vorsehen. Hierdurch können die auf dem Förderteppich bzw. - boden beförderten Personen problemlos während des Umkehrvorgangs der Umlaufgondeln diese besteigen oder aus diesen aussteigen.

Der Einstiegsbereich des Förderbodens kann grundsätzlich verschieden weit und/oder in verschiedene Richtungen beabstandet vom Hauptförderer angeordnet sein. Eine vorteilhafte Ausführung der Erfindung kann hierbei darin bestehen, dass ein Einstiegsbereich des Förderbodens seitlich, d.h. quer zur Hauptförderrichtung des Hauptförderers von dessen Förderbahn beabstandet außerhalb der Fahrspur des Personentragmittels des Hauptförderers angeordnet ist. Die Personen werden dabei in dem ersten Förderbahnabschnitt des Förderbodens sozusagen quer zur Hauptachse des Hauptförderers an dessen Personentragmittel herangeführt. Wird der Förderboden als Ausstiegshilfe eingesetzt, kann in vorteilhafter Weiterbildung der Erfindung der Ausstiegsbereich des Förderbodens in entsprechender Weise grundsätzlich verschieden weit und/oder in verschiedene Richtungen beabstandet vom Hauptförderer angeordnet sein, wobei vorteilhafterweise der Ausstiegsbereich des Förderbodens seitlich, d.h. quer zur Hauptförderrichtung des Hauptförderers von dessen Förderbahn beabstandet außerhalb der Fahrspur des Personentragmittels des Hauptförderers angeordnet ist. Die Personen werden dabei in dem entsprechenden Förderbahnabschnitt des Förderbodens sozusagen quer zur Hauptachse des Hauptförderers von dessen Personentragmittel weggeführt

Die verschiedenen Förderbahnabschnitte des Förderbodens können grundsätzlich verschieden ausgebildet sein. Beispielsweise kann der Förderboden vollends aus gekrümmten bzw. kurvigen Förderbahnsegmenten bestehen, ggf. auch S-förmig an den Hauptförderer heranführen. In bevorzugter Weiterbildung der Erfindung jedoch kann der Förderboden in den zuvor genannten ersten und zweiten Förderbahnabschnitten jeweils einen geraden Verlauf besitzen, wobei diese beiden geraden Förderbahnabschnitte durch einen dritten, kurvigen Förderbahnabschnitt miteinander verbunden sein können. Hierbei kann es beispielsweise in Verbindung mit einem Sessellift als Hauptförderer vorteilhaft sein, wenn die ersten und zweiten Förderbahnabschnitte des Förderbodens jeweils zumindest doppelt so lang wie der dritte, kurvige Förderbahnabschnitt ausgebildet sind.

Anstelle eines solchen sozusagen geknickten Förderbodenverlaufs mit zwei geraden Förderbahnabschnitten und einem dazwischen liegenden kurvigen Förderbahnabschnitt kann der Förderboden jedoch auch den Verlauf einer kontinuierlichen Traktorie besitzen, die sich sanft und gleichmäßig der Förderrichtung des Hauptförderers annähert und umgekehrt seitlich von dieser wegführt.

Bei Ausbildung des Hauptförderers in Form eines Sessellifts ist vorteilhafterweise vorgesehen, dass der zuvor genannte zweite Förderbahnabschnitt des Förderbodens unter der Förderbahn der Sessel verläuft. Hierbei ist eine Geschwindigkeitsdifferenz zwischen Förderbodengeschwindigkeit und Sesselliftgeschwindigkeit vorgesehen, die ein komfortables, aber dennoch zügiges Ein- und Aussteigen ermöglicht. Erfindungsgemäß beträgt im Einstiegsbereich die Förderbodengeschwindigkeit etwa 25 % bis 65 %, vorzugsweise etwa 30 % bis 40 % der Sesselliftgeschwindigkeit und im Ausstiegsbereich etwa 125 % bis 165 %, vorzugsweise etwa 130 % bis 140 % der Sesselliftgeschwindigkeit.

Bei Ausbildung des Hauptförderers als Umlaufgondelbahn kann vorteilhafterweise vorgesehen sein, dass sich der zuvor genannte zweite Förderbahnabschnitt des Förderbodens parallel neben der von den Umlaufgondeln überstrichenen Fahrspur erstreckt, wobei hier insbesondere auch vorgesehen sein kann, dass dieser parallel verlaufende Förderbahnabschnitt sich kurvig entlang des Umkehrkarussells bzw. entlang der Umkehrspur der Umlaufgondeln erstreckt. Hierbei ist vorgesehen, dass zwischen der Geschwindigkeit der Umlaufgondeln und der Geschwindigkeit des Förderbodens kein oder nur ein geringer Geschwindigkeitsunterschied vorgesehen ist, um ein komfortables Einsteigen in die Umlaufgondeln bzw. Aussteigen aus den Umlaufgondeln zu gewährleisten.

Der Förderboden kann grundsätzlich verschieden ausgebildet sein, wobei vorteilhafterweise ein Förderband in Form eines kurvengängigen Gliedergurts vorgesehen werden kann. Vorzugsweise kann das Förderband einander überlappende Trittschuppen umfassen, die um eine aufrechte Drehachse drehbar gelagert sind, so dass sie um die Kurve führbar sind und dabei relativ zueinander verdreht werden können.

Besonders vorteilhaft hinsichtlich einerseits einfacher Konstruktion und andererseits nur geringfügigem Übereinanderschieben, das ein Einziehen bzw. Verschieben des darauf stehenden Fußes bewirken könnte, können Trittschuppen in Form von halbmondförmigen Plattensegmenten sein, die einander paarweise mit ihren bauchigen bzw. konkaven Randsegmenten einander überlappen. Durch derartige schindelförmige Trittschuppen wird ein sicherer Stand für Passagiere erreicht, und zwar sowohl von Skifahrern, die mit Skiern auf dem Förderboden stehen als auch von Fußgängern, die ohne Ski oder mit abgeschnalltem Snowboard den Lift besteigen.

In bevorzugter Weiterbildung der Erfindung sind die genannten Trittschuppen dabei mit ihren sie drehbar lagernden Koppelstücken in einer Führung verschieblich und drehbar geführt, die die Förderbahn des Förderbodens definiert.

Vorteilhafterweise ist dabei den Trittschuppen eine Winkelsteuervorrichtung zugeordnet, mittels derer die Winkelstellung der Trittschuppen entlang der Förderbahn des Förderbodens im Wesentlichen parallel zur Förderbahnlängsachse bzw. parallel zu einer hieran anliegenden Tangente gesteuert wird. Die genannte Winkelsteuervorrichtung kann hierbei beispielsweise Steuerhebel umfassen, die gegenüber den die Drehachse definierenden Koppelstücken einen Hebelarm besitzen und ebenfalls an der Führung geführt sind, an der die genannten Koppelstücke laufen. Alternativ oder zusätzlich könnten die Trittschuppen selbst eine geeignete Führungsnase oder ähnliche Führungselemente besitzen, die von der Drehachse beabstandet ist und die Trittschuppenwinkel steuern. Insbesondere können die Trittschuppen mit zwei Koppelstücken, mittels derer eine jeweils vorauslaufende sowie eine jeweils nachlaufende Trittschuppe gelenkig ankoppelbar ist, in einer die Förderbahn definierenden Führung längsverschieblich geführt sein, so dass sich die Winkelausrichtung sozusagen von selbst entsprechend der Förderbahn einstellt.

Der Antrieb des Förderbodens kann grundsätzlich verschieden ausgebildet sein. In bevorzugter Ausführung der Erfindung umfasst der Förderbodenantrieb im Falle von Trittschuppen Antriebsräder, die mit der Unterseite der Trittschuppen in Eingriff stehen. Vorteilhafterweise ist hierbei ein formschlüssiger Eingriff vorgesehen, wobei insbesondere Antriebsräder in Form von Zahnrädern bzw. Ritzeln vorgesehen sein können, die in zahnstangenartig ausgebildete Einkerbungen bzw. Vertiefungen in der Unterseite der Trittschuppen eingreifen. Hierdurch entsteht eine formschlüssige Verbindung zur Kraftübertragung. Gleichzeitig wird der Gliedergurt seitlich geführt, so dass der Antrieb eine Doppelfunktion erfüllt und auf separate Seitenführungsglieder verzichtet werden kann.

Alternativ oder zusätzlich zu solchen Antriebsrädern kann die Antriebsvorrichtung auch endlos umlaufende, biegeschlaffe Antriebsmittel umfassen, die insbesondere als Rundgliederkette ausgebildet sein können. Alternativ können auch biegsame Riemen als Antriebsmittel endlos umlaufen. Vorteilhafterweise können derartige biegeschlaffe Zugmittel auf der Unterseite der Trittschuppen mit diesen gekoppelt werden, um die Antriebsbewegung auf die Trittschuppen zu übertragen. Denkbar wäre es auch, andere Gliedergurte entsprechend anzutreiben.

Nach einer weiteren vorteilhaften Ausführung der Erfindung kann der Förderboden auch einen kurvengängigen Gliedergurt besitzen, dessen Glieder miteinander um Querachsen gelenkig verbunden sind und miteinander nach Art einer Kette zugkraftübertragend gekoppelt sind, wobei die Glieder bezüglich der Querachsen in Gurtlängsrichtung ausreichend Spiel besitzen, um die Glieder um eine zur Förderbodenebene senkrechte Achse zueinander ausreichend verdrehbar zu machen und den Gliedergurt kurvengängig auszubilden. In diesem Fall bildet der Gliedergurt sozusagen selbst ein biegeschlaffes, bandförmiges Zugmittel, das auf geeignete Weise endlos umlaufend angetrieben werden kann und einen Förderteppich bildet. Vorteilhafterweise können die Glieder dieses Gliedergurts streifenförmige Trittstege bilden, die miteinander gelenkig in der genannten Weise kettenartig miteinander gekoppelt sind. Um ein Schieflaufen oder Aufwerfen des Gliedergurts zu vermeiden, können einzelne oder alle Glieder vorzugsweise an ihren seitlichen Rändern in Längsführungen beispielsweise in Form von Schleif- bzw. Gleitstegen geführt sein.

Die vorliegende Erfindung wird nachfolgend anhand bevorzugter Ausführungsbeispiele und zugehöriger Zeichnungen näher erläutert. In den Zeichnungen zeigen:
- Fig. 1:: eine Draufsicht auf den Einstiegsbereich einer Sesselliftanlage mit einem kurvenförmig zum Einstiegbereich des Sessellifts hin führenden Förder- boden nach einer bevorzugten Ausführung der Erfindung,
- Fig. 2:: einen Aufriss des Einstiegsbereichs der Sesselliftanlage aus Fig. 1,
- Fig. 3:: eine Draufsicht auf den Ausstiegsbereich der Sesselliftanlage aus den vorhergehenden Figuren, in dem ein bogenförmig aus dem Ausstiegsbe- reich herausführender Förderboden vorgesehen ist,
- Fig. 4:: einen Aufriss des Ausstiegsbereichs der Sesselliftanlage aus Fig. 3,
- Fig. 5:: eine Draufsicht auf den Einstiegs-/Ausstiegsbereich einer Umlaufgondel- bahnanlage mit einem bogenförmig um den Umkehrbereich der Umlauf- gondelbahn herumgeführten Förderboden,
- Fig. 6:: einen Aufriss des Einstiegs-/Ausstiegsbereichs der Umlaufgondelbahn- anlage aus Fig. 5,
- Fig. 7:: eine ausschnittsweise Draufsicht auf die Trittschuppen des Förderbo- dens aus den vorhergehenden Figuren,
- Fig. 8:: eine ausschnittsweise Seitenansicht der Trittschuppen aus Fig. 7 und deren Kopplungsstücken, mittels derer die Trittschuppen geführt sind,
- Fig. 9:: einen Querschnitt durch eine der Trittschuppen aus den beiden vorher- gehenden Figuren und deren Lagerung bzw. Führung auf der Trittschup- penunterseite, und
- Fig. 10: eine ausschnittsweise, perspektivische Darstellung eines kurvengängi- gen Gliedergurts, der nach einer weiteren Ausführung der Erfindung für den Förderboden aus den vorhergehenden Figuren 1 bis 6 verwendet werden kann.

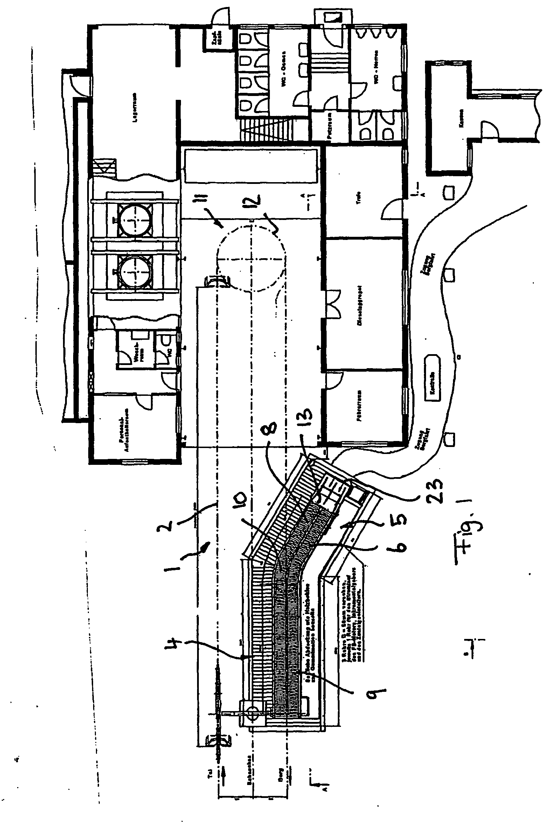

Fig. 1 zeigt die Talstation einer Sesselliftanlage. Der den Hauptförderer 1 bildende Sessellift 2 umfasst ein umlaufendes Tragseil bzw. Förderseil, das in dem Stationsgebäude 2 mittels einer Umkehrvorrichtung 11, genauer gesagt mittels eines Umkehrkarussells 12 umgelenkt wird.

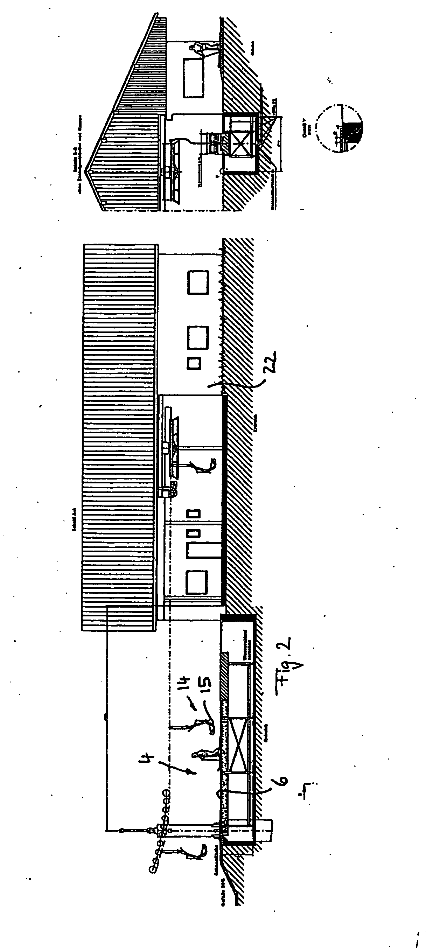

In der gezeichneten Ausführungsform ist der Einstiegsbereich zum Besteigen des Sessellifts 2 außerhalb des genannten Stationsgebäudes 22 angeordnet. Eine Ein-/Ausstiegsplattform 4 ist unter dem bergwärts laufenden Trum des Tragseils angeordnet und höhenmäßig derart an den Sessellift 2 angepasst, dass dessen Personentragmittel 14 in Form der Sessel 15 in passender Höhe über die Einstiegsplattform 4 laufen, vgl. Fig. 2.

Der genannten Ein-/Ausstiegsplattform 4 ist dabei als Hilfsförderer 5 zum Zuführen der Personen ein Förderboden 6 zugeordnet, der eine kurvenförmige Förderbahn 7 beschreibt, wie dies Fig. 1 zeigt. Der Zugangsbereich des Förderbodens 6 liegt seitlich außerhalb, d.h. quer beabstandet von der von den Sessel 15 überstrichenen Fahrspur des Sessellifts 2. Ein erster Förderbahnabschnitt 8 des Förderbodens 6 führt spitzwinklig auf die bergwärts führende Förderspur des Sessellifts 2 zu, wobei in der gezeichneten Ausführungsform der genannte erste Förderbahnabschnitt 8 des Förderbodens 6 unter einem Winkel von etwa 30° zur Förderrichtung des Sessellifts 2 auf diesen zuläuft, vgl. Fig. 1. Dieser erste Förderbahnabschnitt 8 führt also schräg auf den Einstiegsbereich bzw. die Ein-/Ausstiegsplattform 4 zu, auf der der Förderboden 6 dann parallel zur Förderrichtung des Sesselliftes 2 verläuft. Dieser zweite Förderbahnabschnitt 9 des Förderbodens 6 ist mit dem zuvor genannten ersten Förderbahnabschnitt 8 über einen dritten, kurvigen Förderbahnabschnitt 10 verbunden, so dass insgesamt der Förderboden derart kurvenförmig ausgebildet ist, dass er zunächst schräg auf die Förderspur des Sessellifts 2 zuführt, sodann in einer Kurve auf die Förderrichtung des Sessellifts 2 einbiegt und schließlich ein Stück weit parallel zur Förderrichtung des Sesselliftes 2 unter dessen bergwärts laufendem Seiltrum verläuft. Durch diese seitliche Zuführung des Förderbodens 6 um die Kurve herum wird im Bereich des Stationsgebäudes 22 kein Platz benötigt, was insbesondere dann vor Vorteil ist, wenn dort im Bereich des Umkehrkarussells 12 beengte Platzverhältnisse herrschen, so wie dies Fig. 1 zeigt.

Der Zugang zum Einstiegsbereich des Förderbodens 6 wird dabei über einen an sich bekannten Zusteigeeinteiler 23 geregelt, der beispielsweise eine hydraulische oder elektrisch betätigbare Schranke umfasst. Der Zusteigeeinteiler 23 kann dabei auf einer Stützkonstruktion aufgebaut werden, die mit dem Förderboden 6 fest verbunden ist. Von dem Zusteigeeinteiler 23 wird der Förderboden in einem Abstand von etwa einem Meter montiert, wobei zwischen dem Förderboden und dem Zusteigeeinteiler 23 eine Einfahrrampe mit einer geeigneten Neigung von ca. 5 bis 10 % installiert wird.

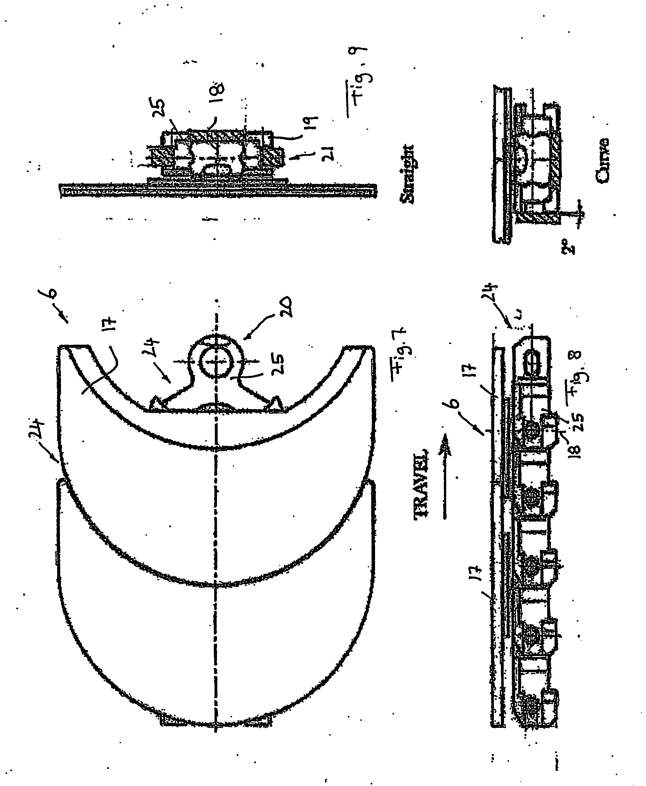

Der Förderboden 6 kann vorteilhafterweise, wie die Fig. 7 bis 9 zeigen, einen Gliedergurt 24 aufweisen, der eine Vielzahl von Trittschuppen 17 aufweist, die in der gezeichneten Ausführung in Form von halbmondförmigen Plattensegmenten ausgebildet sind, vgl. Fig. 7. Diese halbmondförmigen Trittschuppen 17 überlappen einander mit ihren bogenförmigen Rändern, wobei vorteilhafterweise die konkav gewölbte Randseite vorausläuft und von der bauchigen Rückseite der vorauslaufenden Trittschuppe überdeckt wird. Die Trittschuppen 17 können eine Breite von 10 bis 70 cm, vorzugsweise etwa 15 bis 30 cm und eine Länge von ca. 50 cm bis 150 cm, vorzugsweise etwa 70 bis 90 cm besitzen. Die Trittschuppen 17 besitzen an ihrer Unterseite Kopplungsstücke 25, die in der gezeichneten Ausführungsform ösenförmige Verbindungsstücke aufweisen. Mittels dieser ösenförmigen Verbindungsstücke werden benachbarte Trittschuppen 17 miteinander verbunden, wobei ineinander überlappende Ösen entsprechende Verbindungsstäbe eingefügt werden können, wodurch ein endloses Trittschuppenband montiert werden kann.

Mittels der genannten Kopplungsstücke 25 können die Trittschuppen 17 vorteilhafterweise in einer auf der Unterseite der Trittschuppen 17 liegenden Führung 19 längsverschieblich geführt sein, wobei die genannte Führung 19 den zuvor beschriebenen kurvigen Verlauf beschreibt und definiert. Die Trittschuppen 17 sind dabei um aufrechte Drehachsen 18 drehbar, so dass sie parallel zur Förderbahn 7 des Förderbodens 6 bzw. parallel zu einer Tangente hieran geführt werden können. Hierzu ist eine auf der Unterseite der Trittschuppen 17 vorgesehene Winkelsteuervorrichtung 20 vorgesehen, die beispielsweise Führungshebel umfassen kann, die an der genannten Führung 19 geführt sind. Vorteilhafterweise können die Trittschuppen 17 auch dadurch winkelgesteuert sein, dass sie an jeweils zwei Kopplungsstücken 25 geführt sind, da jede Trittschuppe 17 jeweils einerseits mit der vorauslaufenden Trittschuppe 17 und andererseits der nachlaufenden Trittschuppe 17 gekoppelt ist, so dass sich für jede Trittschuppe 17 zwei Führungspunkte ergeben, vgl. Fig. 8.

Wie Fig. 1 zeigt, können gemäß der gezeichneten Ausführungsform mehrere Trittschuppenbänder nebeneinander angeordnet sein, so dass beispielsweise bei einem Zweiersessellift zwei Förderspuren von dem Förderboden 6 vorgesehen werden.

Als Förderbodenantrieb 21 ist in der gezeichneten Ausführungsform ein Ritzelantrieb vorgesehen, der auf der Unterseite der Trittschuppen 17 angreifende Antriebsräder umfasst, die vorteilhafterweise in Form von Zahnrädern ausgebildet sind, die in Einkerbungen bzw. Vertiefungen an der Unterseite der Trittschuppen 17 angreifen. Hierdurch entsteht eine formflüssige Verbindung zur Kraftübertragung. Gleichzeitig wird das Trittschuppenband 17 seitlich geführt. Umkehrseitig befinden sich ebenfalls Zahnräder. Der Durchmesser der Antriebs- bzw. Umkehreinheiten kann hierdurch minimiert werden.

Alternativ oder zusätzlich zu einem solchen Ritzelantrieb kann die Antriebsvorrichtung auch endlos umlaufende, biegeschlaffe Antriebsmittel umfassen, die insbesondere als Rundgliederkette ausgebildet sein können. Alternativ können auch biegsame Riemen als Antriebsmittel endlos umlaufen. Vorteilhafterweise können derartige biegeschlaffe Zugmittel auf der Unterseite der Trittschuppen 17 mit diesen gekoppelt werden, um die Antriebsbewegung auf die Trittschuppen 17 zu übertragen.

Um eine Trittsicherheit auf den Trittschuppen 17 zu gewährleisten, können diese an ihrer Oberfläche mit einer geeigneten Anti-Rutsch-Struktur versehen sein, beispielsweise in Form einer aufgerauten Oberflächenstruktur.

Vorteilhafterweise ist der von den Trittschuppen 17 gebildete Fördergurt des Förderbodens 6 mittig zwangsgeführt, so dass ein seitliches Verlaufen des Fördergurts unmöglich ist. Dies kann durch die Führung 19 erreicht werden, in der die Kopplungsstücke 25 laufen.

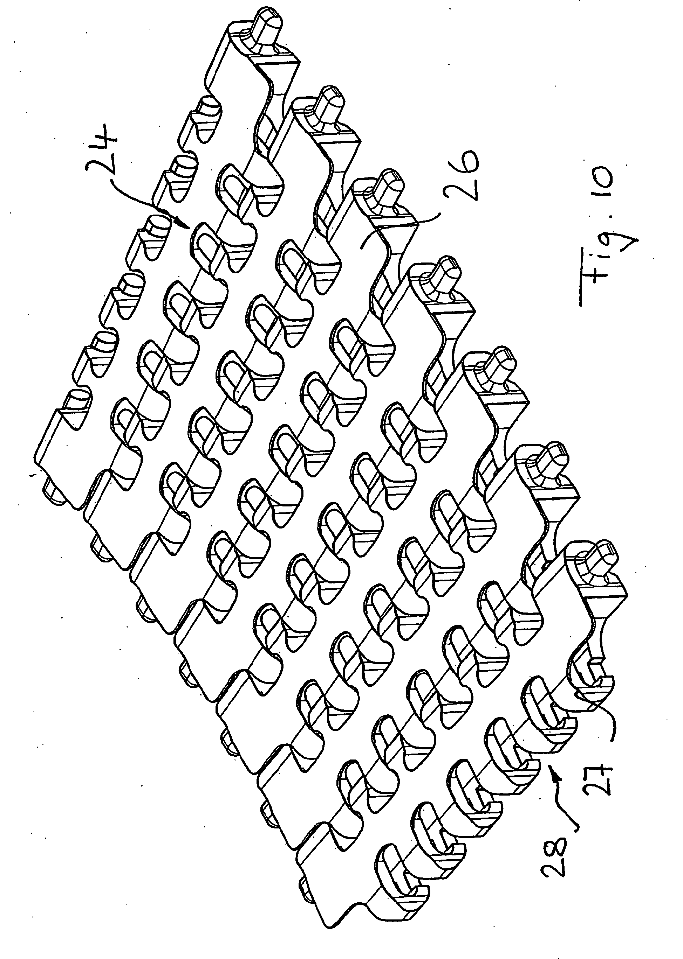

Anstelle derartiger Trittschuppen 17 kann nach einer weiteren vorteilhaften Ausführung der Erfindung, die Fig. 10 zeigt, der Förderboden auch einen kurvengängigen Gliedergurt 24 besitzen, dessen Glieder 26 miteinander um Querachsen gelenkig verbunden sind und miteinander nach Art einer Kette zugkraftübertragend gekoppelt sind, wobei die Glieder 26 bezüglich der Querachsen in Gurtlängsrichtung ausreichend Spiel besitzen, um die Glieder 26 um eine zur Förderbodenebene senkrechte Achse zueinander ausreichend verdrehbar zu machen und den Gliedergurt 24 kurvengängig auszubilden. In diesem Fall bildet der Gliedergurt 24 sozusagen selbst ein biegeschlaffes, bandförmiges Zugmittel, das auf geeignete Weise endlos umlaufend angetrieben werden kann und einen Förderteppich bildet. Vorteilhafterweise können die Glieder 26 dieses Gliedergurts 24 streifenförmige Trittstege bilden, die miteinander gelenkig in der genannten Weise kettenartig miteinander gekoppelt sind. Dabei können vorteilhafterweise die genannten Glieder 26 kammartig angeordnete Gelenknasen 27 aufweisen, die in am jeweils nächsten Glied vorgesehene Gelenkausnehmungen 28 eingreifen, die ebenfalls in entsprechender Weise in Querrichtung des Gliedergurts nebeneinander aufgereiht sind. Insbesondere kann ein jedes Glied 26 einerseits Gelenknasen 27 und andererseits dazu komplementäre Gelenkeinbuchtungen 28 aufweisen, die zueinander in Querrichtung um einen Teilungsschritt versetzt sind, so daß Gelenknasen 27 und -einbuchtungen 28 kammartig ineinader greifen können, wie dies Fig. 10 zeigt. An den Gelenknasen und -einbuchtungen sind dabei geeignete formschlüssige Eingriffsmittel, beispielsweise in Form von Gelenkstiften und Gelenkstifttaschen, vorgesehen, die die gewünschte Gelenkigkeit um die Querachse und das Spiel in Längsrichtung realisieren, welches wiederum die Kurvengängigkeit des Gliedergurts 24 bewirkt. Um ein Schieflaufen oder Aufwerfen des Gliedergurts zu vermeiden, können einzelne oder alle Glieder vorzugsweise an ihren seitlichen Rändern in Längsführungen beispielsweise in Form von Schleif- bzw. Gleitstegen geführt sein.

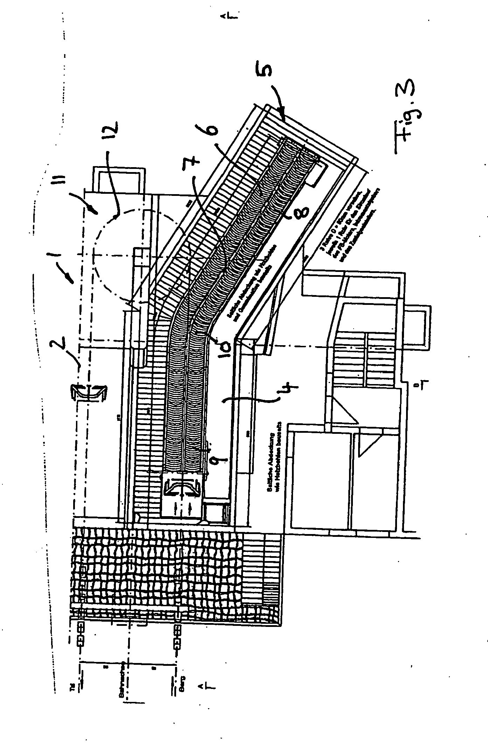

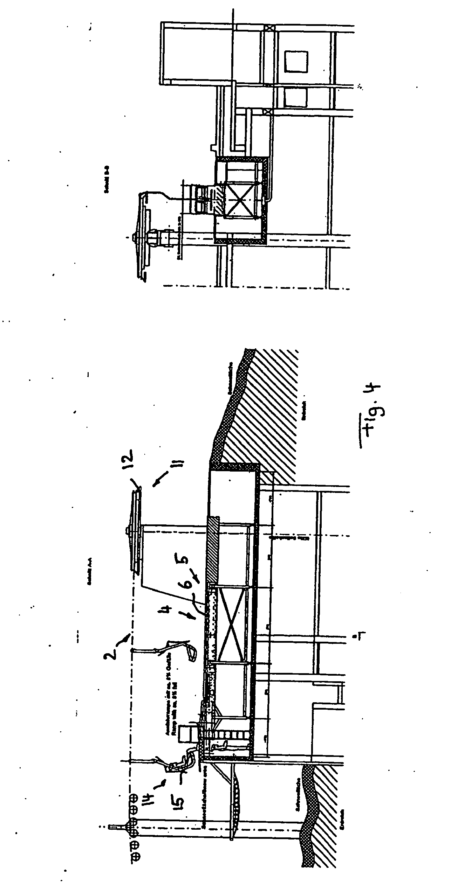

In den Figuren 1 und 2 ist der Förderboden 6 im Einstiegsbereich des Sessellifts 2 als Einstiegshilfe montiert. Wie die Figuren 3 und 4 zeigen, kann ein solcher kurvenförmiger Förderboden 6 auch im Ausstiegsbereich des Sessellifts 2 von Vorteil sein. Hierbei ist ein entsprechend ausgebildeter Förderboden 6 sozusagen kinematisch umgekehrt montiert. Der Förderboden 6 verläuft zunächst parallel unter dem Sessellift 2 auf der Ausstiegsplattform 4, so dass die Sesselliftpassagiere passgenau auf den mitfahrenden Förderboden 6 aufsteigen können. Dieser führt sodann mit einem kurvenförmigen Förderbahnabschnitt 9 seitlich aus dem Förderweg des Sessellifts 2 heraus. Mittels eines geraden, zur Förderrichtung des Sesselifts 2 spitzwinklig geneigten Förderbodenabschnitts führt der Förderboden 6 die Skifahrer bzw. Passagiere sicher aus dem Wirkbereich des Sessellifts 2 heraus. Dabei führt der Förderboden 6 vorteilhafterweise an dem Umkehrkarussell des Sessellifts 2 vorbei, so dass der das Umkehrkarussell 12 umgebende Bereich der Bergstation nicht für das Aussteigen der Passagiere benötigt wird.

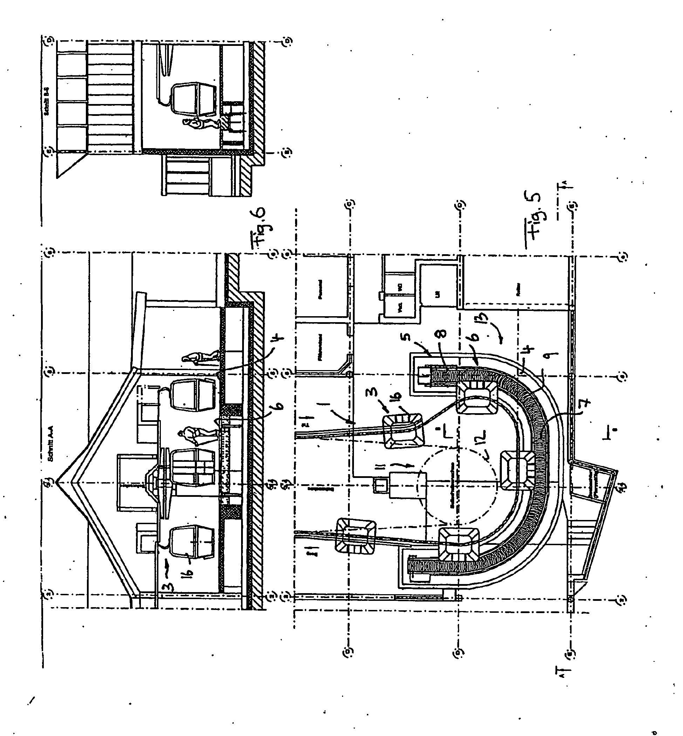

Wie die Figuren 5 und 6 zeigen, kann ein kurvenförmig gekrümmter Förderboden 7 auch als Einstiegs- und/oder Ausstiegshilfe für eine Umlaufgondelbahn 3 vorteilhaft eingesetzt werden. Wie Fig. 5 zeigt, kann vorteilhafterweise vorgesehen werden, dass der Förderboden 6 bogenförmig um den Umkehrbereich der Umlaufgondelbahn 3 herumgeführt wird, so dass der Förderboden 6 zumindest abschnittsweise der Förderbahn der Umlaufgondeln 16 im Umkehrbereich folgt. Insbesondere kann der Förderboden 6 derart an die Förderbahn der Umlaufgondeln 16 angepasst sein, dass der Förderboden 6 seitlich neben den Gondeln 16 herläuft, so dass auf dem Förderboden 6 stehende Passagiere problemlos an den im Umkehrbereich umlaufenden Gondeln Ski oder Snowboards befestigen und sodann in die Gondeln einsteigen können. Umgekehrt können Passagiere auf den mitlaufende Förderboden aus den Umlaufgondeln aussteigen, ohne beim Aussteigen gleich loslaufen zu müssen, sowie auf dem Förderboden stehend von den Umlaufgondeln die daran befestigten Ski oder Snowboards wegnehmen.

Vorteilhafterweise besitzt der Förderboden 6 auch hier einen Einstiegsabschnitt, der spitzwinklig auf die Förderbahn der Umlaufgondeln zuführt, so dass die Passagiere automatisch an den Einstiegsbereich der Umlaufgondeln herangeführt werden, vgl. Fig. 5, und/oder einen vom Ausstiegsbereich der Umlaufgondeln wegführenden Ausstiegsabschnitt, der spitzwinklig von der Förderbahn der Umlaufgondel wegführt.

## Patentansprüche

1. Personenförderanlage, insbesondere Skiliftanlage in Form einer Sessellift- oder Umlaufgondelbahnanlage, mit einem Hauptförderer (1), insbesondere Sessellift (2) oder Umlaufgondelbahn (3), einer Ein-/Ausstiegsplattform (4) zum Besteigen und/oder Verlassen des an der Ein-/Ausstiegsplattform (4) vorbeifahrenden Hauptförderers (1), sowie einem Hilfsförderer (5) in Form eines Förderbodens (6) zum Hin- und/oder Abbefördern von Personen an die bzw. von der Ein-/Ausstiegsplattform (4), wobei der Förderboden (6) eine kurvenförmige Förderbahn (7) besitzt, die einen ersten Förderbahnabschnitt (8) mit geradem Verlauf, der schräg zur Förderrichtung des Hauptförderers (1) auf die Ein-/Ausstiegsplattform (4) zuführt oder von der Ein-/Ausstiegsplattform (4) wegführt, sowie einen zweiten Förderbahnabschnitt (9) mit geradem Verlauf, der im Wesentlichen parallel zur Förderrichtung des Hauptförderers (1) an der Ein-/Ausstiegsplattform (4) verläuft, umfasst, **dadurch gekennzeichnet, dass** die genannten ersten und zweiten Förderbandabschnitte (8, 9) mit geradem Verlauf durch einen dritten bogenförmig gekrümmten Förderbodenabschnitt (10) miteinander verbunden sind, wobei bei Ausbilfung des Hauptförderers (1) als Sessellift und Anordnung des Förderbodens (6) in dessen Einstiegsbereich die Fördergeschwindigkeit des Förderbodens 25%-65% der Fördergeschwindigkeit des Sessellifts und bei Anordnung des Förderbodens (6) im Ausstiegsbereich 125%-165% der Fördergeschwindigkeit des Sessellifts beträgt, und bei Ausbildung des Hauptförderers als Umlaufgondelbahn die Fördergeschwindigkeit des Förderbodens (6) im Wesentlichen der Fördergeschwindigkeit des Hauptförderers entspricht.

2. Personenförderanlage nach dem vorhergehenden Anspruch, wobei der erste
Förderbahnabschnitt (8) unter einem Winkel von 20° bis 60°, vorzugsweise etwa 30° zur Förderachse des Hauptförderers (1) geneigt auf den Hauptförderer (1) zuführt oder von diesem wegführt.

3. Personenförderanlage nach einem der vorhergehenden Ansprüche, wobei der Förderboden (6) von einer Umkehrvorrichtung (11), insbesondere einem Umkehrkarussell (12) des Hauptförderers (1) in Förderrichtung des Hauptförderers (1) beabstandet ist, insbesondere außerhalb des Wirkbereichs des Umkehrkarussells (12) des Hauptförderers (1) angeordnet ist.

4. Personenförderanlage nach einem der Ansprüche 1 oder 2, wobei der Förderboden (6) im Umkehrbereich des Hauptförderers (1) angeordnet ist und der bogenförmigen Umkehrbahn des Hauptförderers (1) folgt, wobei die Förderbahn (7) des Förderbodens (6) an die bogenförmige Umkehrbahn des Hauptförderers (1) angepasst ist und zumindest abschnittsweise parallel zu der genannten bogenförmigen Umkehrbahn des Hauptförderers (1) verläuft.

5. Personenförderanlage nach einem der vorhergehenden Ansprüche, wobei ein Einstiegsbereich (13) des Förderbodens (6) seitlich von der Förderbahn des Hauptförderers (1) beabstandet außerhalb der Fahrspur der Personentragmittel des Hauptförderers (1), insbesondere dessen Sessel (15) oder Umlaufgondeln (16) angeordnet ist und/oder geneigt zur Förderbahn des Hauptförderers verläuft.

6. Personenförderanlage nach einem der vorhergehenden Ansprüche, wobei die ersten und zweiten Förderbahnabschnitte (8, 9) jeweils zumindest doppelt so lang sind wie der genannte dritte, kurvige Förderbahnabschnitt (10).

7. Personenförderanlage nach einem der vorhergehenden Ansprüche, wobei bei Ausbildung des Hauptförderers (1) als Sessellift (2) der genannte zweite Förderbahnabschnitt (9) des Förderbodens (6) unter der Förderbahn des Sessellifts (2) verläuft.

8. Personenförderanlage nach einem der vorhergehenden Ansprüche, wobei bei Ausbildung des Hauptförderers (1) als Umlaufgondelbahn der vorgenannte zweite Förderbahnabschnitt (9) des Förderbodens (6) seitlich neben der Förderbahn der Umlaufgondelbahn verläuft.

9. Personenförderanlage nach einem der vorhergehenden Ansprüche, wobei der Förderboden (6) einander überlappende Trittschuppen (17) umfasst, die mittels drehbar gelagerten Koppelstücken um aufrechte Drehachsen (18) drehbar gelagert sind.

10. Personenförderanlage nach dem vorhergehenden Anspruch, wobei die einander überlappenden Trittschuppen (17) ein Gliederband bilden und/oder Teil eines Gliederbandes sind, wobei vorzugsweise die Trittschuppen (17) von halbmondförmigen Plattensegmenten gebildet sind.

11. Personenförderanlage nach einem der beiden vorhergehenden Ansprüche, wobei die Trittschuppen in einer die Förderbahn (7) des Förderbodens (6) definierenden Führung (19) verschieblich geführt sind, wobei den Trittschuppen (17) eine Winkelsteuervorrichtung (20) zugeordnet ist, mittels derer die Winkelstellung der Trittschuppen (17) entlang der Förderbahn (7) des Förderbodens (6) im Wesentlichen parallel zur Förderbahnlängsachse oder einer an die Förderbahn anliegenden Tangente gesteuert ist.

12. Personenförderanlage nach einem der vorhergehenden Ansprüche, wobei der Förderboden (6) einen Förderbodenantrieb (21) besitzt, der auf der Unterseite der Trittschuppen (17) angeordnete Antriebsräder umfasst, wobei die Antriebsräder des Förderbodenantriebs vorzugsweise in Form von Zahnrädern ausgebildet sind, die mit einem zahnstangenartig ausgebildeten Eingriffsprofil der Trittschuppen kämmen, und/oder eine Seitenführung für die Trittschuppen bilden.

13. Personenförderanlage nach einem der vorhergehenden Ansprüche, wobei der Förderboden (6) endlos umlaufende, biegeschlaffe Antriebsmittel vorzugsweise in Form einer Rundgliederkette aufweist, wobei die biegeschlaffen Antriebsmittel vorzugsweise auf der Unterseite der Trittschuppen (17) mit diesen verbunden sind.

14. Personenförderanlage nach einem der Ansprüche 1 bis 11, wobei der Förderboden (6) einen kurvengängigen Gliedergurt (24) besitzt, dessen Glieder (26) miteinander um Querachsen gelenkig verbunden sind und miteinander nach Art einer Kette zugkraftübertragend gekoppelt sind, wobei die Glieder (26) bezüglich der Querachsen in Gurtlängsrichtung Spiel aufweisen, mittels dessen die Glieder (26) um eine zur Förderbodenebene senkrechte Achse zueinander verdrehbar sind und der Gliedergurt (24) kurvengängig ist.

## Claims

1. A passenger transportation system, in particular a ski lift system in the form of a chair lift system or of a circulating gondola lift system, having a main conveyor (1), in particular a chair lift (2) or a circulating gondola lift (3), having a boarding/disembarking platform (4) for the entering and/or exiting of the main conveyor (1) moving past the boarding/disembarking platform (4), as well as having an auxiliary conveyor (5) in the form of a conveyor floor (6) for the conveying of passengers to or from the boarding/disembarking platform (4), wherein the conveyor floor (6) has a curved conveyor path (7) which includes a first conveyor path section (8) with a straight extent which runs slantingly to the direction of conveying of the main conveyor (1) toward the boarding/disembarking platform (4) or leads away from the boarding/disembarking platform (4), as well as having a second conveyor path section (9) with a straight extent which extends substantially parallel to the direction of conveying of the main conveyor (1) at the boarding/disembarking platform (4), **characterized in that** the first and second conveyor path sections (8, 9) with a straight extent are connected to one another by a third, arcuate conveyor path section (10), with the conveyor speed of the conveyor floor being 25% to 65 of the conveyor speed of the chair lift on the formation of the main conveyor (1) as a chair lift (2) and on the arrangement of the
conveyor floor (6) in its boarding zone, and the conveyor speed of the conveyor floor being 125% to 165% of the conveyor speed of the chair lift on the arrangement of the conveyor floor (6) in the disembarking zone and the conveyor speed of the conveyor floor (6) substantially corresponding to the conveyor speed of the main conveyor on the formation of the main conveyor as a circulating gondola lift.

2. A passenger transportation system in accordance with the preceding claim, wherein the first conveyor path section (8) runs toward the main conveyor (1) or leads away from it slantingly at an angle of 20° to 60°, preferably approximately 30°, to the conveyor axis of the main conveyor (1).

3. A passenger transportation system in accordance with one of the preceding claims, wherein the conveyor floor (6) is spaced apart from a reversal device (11), in particular a reversal carousel (12) of the main conveyor (1) in the direction of conveying of the main conveyor (1), is in particular arranged outside the operational area of the reversal carousel (12) of the main conveyor (1).

4. A passenger transportation system in accordance with either of the claims 1 or 2, wherein the conveyor floor (6) is arranged in the reversing region of the main conveyor (1) and follows the arcuate reversing path of the main conveyor (1) wherein the conveyor path (7) of the conveyor floor (6) is matched to the arcuate reversing path of the main conveyor (1) and extends in parallel at least section-wise to the named arcuate reversing path of the main conveyor (1).

5. A passenger transportation system in accordance with one of the preceding claims, wherein a boarding zone (13) of the conveyor floor (6) is spaced apart laterally from the conveyor path of the main conveyor (1) arranged outside the travel track of the passenger carrier means of the main conveyor (1), in particular its chairs (15) or circulating gondolas (16), and/or extends inclined to the conveyor path of the main conveyor.

6. A passenger transportation system in accordance with one of the preceding claims, wherein the first and second conveyor path sections (8, 9) are each at least twice as long as the named third, curved conveyor path section (10).

7. A passenger transportation system in accordance with one of the preceding claims, wherein the named second conveyor path section (9) of the conveyor floor (6) extends beneath the conveyor path of the chair lift (2) on the formation of the main conveyor (1) as a chair lift (2).

8. A passenger transportation system in accordance with one of the preceding claims, wherein the aforesaid second conveyor path section (9) of the conveyor floor (6) extends laterally next to the conveyor path of the circulating gondola lift on formation of the main conveyor (1) as a circulating gondola lift.

9. A passenger transportation system in accordance with one of the preceding claims, wherein the conveyor floor (6) includes mutually overlapping tread plates (17) which are rotatably journaled around upright axes of rotation (18) by means of rotatably journaled coupling pieces.

10. A passenger transportation system in accordance with the preceding claim, wherein the mutually overlapping tread plates (17) form a link band and/or are part of a link band, with the tread plates (17) preferably being formed by crescent-shaped plate segments.

11. A passenger transportation system in accordance with one of the two preceding claims, wherein the tread plates are displaceably guided in a guide (19) defining the conveyor path (7) of the conveyor floor (6), with an angle control device (20) being associated with the tread plates (17) by means of which the angular position of the tread plates (17) along the conveyor path (7) of the conveyor floor (6) is controlled substantially parallel to the conveyor path longitudinal axis or to a tangent adjacent to the conveyor path.

12. A passenger transportation system in accordance with one of the preceding claims, wherein the conveyor floor (6) has a conveyor floor drive (21) which includes drive wheels arranged at the lower side of the tread plates (17), with the drive wheels of the conveyor floor drive preferably being made in the form of gears which mesh with a rack-like engagement section of the tread plates and/or forming a lateral guide for the tread plates.

13. A passenger transportation system in accordance with one of the preceding claims, wherein the conveyor floor (6) has endlessly circulating, pliable drive means, preferably in the form of a round link chain, with the pliable drive means preferably being connected to the tread plates (17) at the lower side thereof.

14. A passenger transportation system in accordance with one of the claims 1 to 11, wherein the conveyor floor (6) has a curved link belt (24) whose links (26) are pivotally connected to one another around transverse axes and are coupled to one another in the manner of a chain in manner transmitting tensile force, with the links (26) having play with respect to the transverse axes in the longitudinal direction of the belt by means of which the links (26) are rotatable with respect to one another around an axis perpendicular to the conveyor floor plane and the link belt (24) is curved.

## Revendications

1. Installation de transport de personnes, notamment remonte-pente sous la forme d'un télésiège ou d'une installation de téléphérique, avec un transporteur principal (1), notamment un télésiège (2) ou un téléphérique (3), une plate-forme de montée/descente (4) pour monter et/ou descendre du transporteur principal (1) passant le long de la plate-forme de montée/descente (4), ainsi qu'un transporteur d'assistance (5) sous la forme d'un plancher de transport (6) destiné à transporter des personnes à destination et/ou en provenance de la plate-forme de montée/descente (4), le plancher de transport (6) possédant une voie de transport incurvée (7) qui comprend une première section de voie de transport (8) à tracé droit conduisant à la plate-forme de montée/descente (4) ou partant de la plate-forme de montée/descente (4) en biais par rapport au sens de transport du transporteur principal (1), ainsi qu'une deuxième section de voie de transport (9) à tracé droit, qui circule pour l'essentiel parallèlement au sens de transport du transporteur principal (1) sur la plate-forme de montée/descente (4), **caractérisé en ce que** les première et deuxième section de voie de transport (8, 9) nommées à tracé droit sont reliées entre elles par une troisième section de plate-forme de transport bombée en forme de voûte (10), la vitesse de transport du plancher de transport s'élevant, en cas de formation du transporteur principal (1) comme télésiège et de disposition du plancher de transport (6) dans la zone de montée de ce dernier, à 25 % -65 % de la vitesse de transport du télésiège et en cas de disposition du plancher de transport (6) dans la zone de descente, à 125 % -165 % de la vitesse de transport du télésiège, et en cas de formation du transporteur principal comme téléphérique, la vitesse de transport du plancher de transport (6) correspond pour l'essentiel à la vitesse de transport du transporteur principal.

2. Installation de transport de personnes selon la revendication précédente, la première section de voie de transport (8) conduisant au transporteur principal (1) ou partant de celui-ci en position inclinée à un angle de 20° à 60°, de préférence d'environ 30° par rapport à l'axe de transport du transporteur principal (1).

3. Installation de transport de personnes selon une quelconque des revendications précédentes, le plancher de transport (6) étant écarté d'un dispositif d'inversion (11), notamment d'un carrousel d'inversion (12) du transporteur principal (1) dans le sens de transport du transporteur principal (1), et disposé notamment en dehors de la zone d'effet du carrousel d'inversion (12) du transporteur principal (1).

4. Installation de transport de personnes selon une quelconque des revendications 1 ou 2, le plancher de transport (6) étant disposé dans la zone d'inversion du transporteur principal (1) et suivant la voie d'inversion en forme de voûte du transporteur principal (1), la voie de transport (7) du plancher de transport (6) étant adaptée à la voie d'inversion en forme de voûte du transporteur principal (1), et circulant de manière au moins parallèle par section par rapport à ladite voie d'inversion en forme de voûte du transporteur principal (1).

5. Installation de transport de personnes selon une quelconque des revendications précédentes, une zone de montée (13) du plancher de transport (6) est espacée sur le côté de la voie de transport du transporteur principal (1) en dehors de la voie de circulation du moyen de transport de personnes du transporteur principal (1), notamment de ses sièges (15) ou de ses cabines (16) et/ou circule de manière inclinée par rapport à la voie de transport du transporteur principal.

6. Installation de transport de personnes selon une quelconque des revendications précédentes, les première et deuxième sections de voie de transport (8, 9) sont au moins deux fois plus longues que ladite troisième section de voie de transport incurvée (10).

7. Installation de transport de personnes selon une quelconque des revendications précédentes, ladite deuxième section de voie de transport (9) du plancher de transport (6), en cas de formation du transporteur principal (1) comme télésiège (2), circulant sous la voie de transport du télésiège (2).

8. Installation de transport de personnes selon une quelconque des revendications précédentes, ladite deuxième section de voie de transport (9) du plancher de transport (6), en cas de formation du transporteur principal (1) comme téléphérique, circulant latéralement à côté de la voie de transport du téléphérique.

9. Installation de transport de personnes selon une quelconque des revendications précédentes, le plancher de transport (6) comprenant des tôles de marchepied (17) s'imbriquant les unes dans les autres, qui sont mises sur paliers tournants autour d'axes rotatifs droits (18) à l'aide d'éléments de coupole sur paliers tournants.

10. Installation de transport de personnes selon la revendication précédente, les tôles de marchepied (17) s'imbriquant les unes dans les autres constituant une chaîne d'éléments et/ou faisant partie d'une chaîne d'éléments, les tôles de marchepied (17) étant constituées de préférence de segments de plaques en demi-lune.

11. Installation de transport de personnes selon une quelconque des deux revendications précédentes, les tôles de marchepied étant introduites de manière amovible dans un guidage (19) définissant la voie de transport (7) du plancher de transport (6), un dispositif de commande de mouvements angulaires (20) étant affecté aux tôles de marchepied (17), à l'aide duquel la position d'angle des tôles de marchepied (17) est commandée le long de la voie de transport (7) du plancher de transport (6) pour l'essentiel parallèlement à l'axe longitudinal de la voie de transport ou à une tangente adjacente à la voie de transport.

12. Installation de transport de personnes selon une quelconque des revendications précédentes, le plancher de transport (6) possédant un entraînement de plancher de transport (21), qui comprend des roues d'entraînements disposées sur la face inférieure des tôles de marchepied (17), les roues d'entraînement de l'entraînement de plancher de transport étant constituées de préférence en forme de roues dentées, qui s'engrènent avec un profil d'engrenage constitué en forme de crémaillère des tôles de marchepied, et/ou constituent un guidage latéral pour les tôles de marchepied.

13. Installation de transport de personnes selon une quelconque des revendications précédentes, le plancher de transport (6) présentant des moyens d'entraînement sur le pourtour, mous à la flexion, de préférence en forme d'une chaîne à maillons ronds, les moyens entraînements mous à la flexion étant reliés de préférence avec les tôles de marchepied (17) sur la face inférieure de celles-ci.

14. Installation de transport de personnes selon une quelconque des revendications 1 à 11, le plancher de transport (six) possédant une sangle articulée à tapis métallique courbe (24), dont les éléments (26) sont reliés entre eux de manière articulée autour d'axes transversaux et couplés les uns avec les autres à la manière d'une chaîne transmettant la force de traction, les éléments (26) présentant par rapport aux axes transversaux du jeu dans le sens longitudinal de la sangle, à l'aide duquel les éléments (26) sont pivotants les uns vers les autres autour d'un axe vertical par rapport au plan du plancher de transport, et la sangle articulée (24) étant à tapis métallique courbe.
